Europäisches Patentamt

European Patent Office

Office européen des brevets

(11) Veröffentlichungsnummer : **0 457 200 B1**

(12) **EUROPÄISCHE PATENTSCHRIFT**

(45) Veröffentlichungstag der Patentschrift :
21.09.94 Patentblatt 94/38

(21) Anmeldenummer : 91107567.9

(22) Anmeldetag : 09.05.91

(51) Int. Cl.⁵ : **G01C 1/00, G01C 19/38**

(54) **Verfahren zur Messung von Winkeln und Winkelkennlinien mit Hilfe eines Kreisels.**

(30) Priorität : **14.05.90 DE 4015800**
**09.07.90 DE 4021793**

(43) Veröffentlichungstag der Anmeldung :
**21.11.91 Patentblatt 91/47**

(45) Bekanntmachung des Hinweises auf die
Patenterteilung :
**21.09.94 Patentblatt 94/38**

(84) Benannte Vertragsstaaten :
**DE FR GB**

(56) Entgegenhaltungen :
**WO-A-88/09913**
**DE-A- 3 111 130**
**US-A- 4 151 656**
**AGARD-AG-160, Bd. 15, Seiten 166-184; B.**
**Stieler, H. Winter: "Hybrid Instrumentation Sy-**
**stems and Their Application to Flight Testing**
**of On-board and Ground Equipment"**

(56) Entgegenhaltungen :
**PROCEEDINGS OF THE NAECON 1985, Bd. 1,**
**20. Mai 1985, Dayton, Ohio, US, Seiten 260-267;**
**U.K. Krogmann: "Concept and Performance**
**Analysis of a Strapdown Northfinder"**

(73) Patentinhaber : **Deutsche Forschungsanstalt**
**für Luft- und Raumfahrt e.V.**
**Linder Höhe**
**Postfach 90 60 58**
**D-51126 Köln (DE)**

(72) Erfinder : **Stieler, Bernhard, Dr.-Ing.**
**Klingemannstrasse 12**
**W-3300 Braunschweig (DE)**
Erfinder : **Wetzig, Volker**
**Höhenblick 8**
**W-3300 Braunschweig (DE)**

(74) Vertreter : **Gralfs, Harro, Dipl.-Ing.**
**Patentanwalt**
**Jasperallee 1 A**
**D-38102 Braunschweig (DE)**

## Beschreibung

Die Erfindung betrifft ein Verfahren zur Messung von Winkeln zwischen Bezugsrichtungen mit Hilfe eines Kreisels.

Die Messung von Winkeln und von zu messenden Winkeln abhängigen Winkelkennlinien, das heißt der Abhängigkeit von Winkelverformungen oder -verstellungen von Bauteilen und angreifenden Kräften oder Momenten ist in der Technik ein bedeutsames und nicht ganz einfach zu lösendes Problem.

In der Kfz-Technik sind Karrosserieverformungen in Abhängigkeit von äußeren Belastungen zu messen. In der Bauindustrie sind es sind es Winkel und Verformungen an Brücken oder Gebäuden. Auch in der Flugzeugindustrie sind vor Indienststellung neuer Modelle Winkel- und Verformungsmessungen an Rumpf und Flügeln in Abhängigkeit von mechanisch aufgebrachten Kräften und Momenten vorzunehmen. In Windkanälen werden an Flugzeugmodellen aerodynamische Kräfte und Momente in Abhängigkeit von einem Verstellwinkel gemessen. Weiter sind in der Geodäsie Winkel zwischen Bezugsrichtungen zu vermessen.

Zur genauen Vermessung von Winkeln oder Winkelkennlinien sind bekannte Meßverfahren einsetzbar, die jedoch umständlich zu handhaben oder störanfällig sind.

Die Verwendung der bei Werkzeugmaschinen und Robotern so vorteilhaft einzusetzenden Drehgeber kommt für viele Anwendungsfälle nicht in Betracht, da bei ihnen die Meßachse mit einer genau definierten Drehachse fluchten muß.

Bei Anwendung optischer Meßverfahren, wie der Autokollimation, muß eine ortsfeste Basis geschaffen werden in Form eines auf einem Fundament stehenden Gestells und weiterhin muß ein Spiegel auf dem sich verformenden Gegenstand in den Strahlengang einjustiert werden, der in der Regel bei Belastung aus dem Strahlengang herauswandert.

Inklinometer, das sind im Prinzip Beschleunigungsmesser, sind in dieser Hinsicht flexibler zu handhaben. Sie benötigen weder eine ortsfeste Basis noch muß eine Drehachse bekannt sein. Sie messen allerdings nur Neigungen gegenüber der Lotrichtung und sind in ihrer Messung empfindlich gegenüber Horizontalbeschleunigungen. Diese Einschränkung ist in vielen Fällen von Nachteil.

Kreisel messen Drehgeschwindigkeiten gegenüber einer raumfesten Bezugsrichtung, die bekanntlich in jeder Richtung zu definieren ist.

Wegen der Drehung der Erde gegenüber der raumfesten Bezugsrichtung muß zur Messung von Drehgeschwindigkeiten gegenüber der Erde die entsprechende Komponente der Erdrate bekannt sein. Erst nach Kompensation der Erdrate und ihr überlagerter Meßabweichungen, d.h. der Kreiseldrift und der Einflüsse eines Skalenfaktorfehlers, mißt der Kreisel Drehgeschwindigkeiten gegenüber der Erde mit großer Präzision, woraus mit Hilfe eines Rechners durch Integration auch Drehwinkel zu bestimmen sind. Unter diesen Voraussetzungen sind Kreisel sehr flexibel zu handhabende Winkelsensoren.

In inertialen Navigationssystemen (INS), die in jedem modernen Flugzeug eingebaut sind, werden mit drei Kreiseln und drei Beschleunigungsmessern und einem umfangreichen Digitalrechner zwar auch die Winkel für Kurs und Lage des Flugzeugs gegenüber erdfesten Bezugsrichtungen ermittelt. Für die ausschließliche Vermessung von Winkeln und Winkelkennlinien ist aber ein INS viel zu aufwendig. Zur genauen Durchführung dieser Meßaufgabe müßten außerdem in einem INS die Sensorfehler korrigiert werden, was nach dem Stand der Technik durch Anwendung von Kalibrier- oder Stützverfahren geschieht.

Kalibrierverfahren zur Ermittlung der Sensorfehler werden vor oder nach dem Meßprozeß eingesetzt, da dann bekannte externe Referenzen zur Verfügung stehen. Sie erfordern aber einen hohen Zeitaufwand, da die Ermittlung der Kreiseldrift durch einen zeitlichen Integrationsprozeß geschieht und die Genauigkeit mit zunehmender Kalibrierzeit ansteigt. Zum andern ist die erzielbare Meßgenauigkeit für Winkel- und Winkelkennlinien dann eingeschränkt, wenn Sensoren im Einsatz sind, deren Driftparameter von der Zeit abhängen, da die zitierten Kalibrierverfahren von einer bestimmten Stabilität dieser Werte während des Meßprozesses ausgehen.

Die Anwendung sogenannter Stützverfahren beinhaltet nach dem Stand der Technik (B. Stieler H. Winter: "Gyroscopic Instruments and their Application to Flight Testing", AGARD-AG-160-Vol.15, Kap. 8, Seite 166 bis 184) die Verarbeitung bekannter externer Referenzen während des Meßprozesses unter Anwendung spezieller mathematischer Algorithmen (z.B. Kalmanfilter). Gegenüber den obengenannten Kalibrierverfahren können sie in weit stärkerem Maße noch mit Erfolg eingesetzt werden, wenn Sensoren minderer Qualität, d.h. mit instabilen Driftparametern zur Anwendung gelangen. Nachteilig beim Einsatz dieser Verfahren ist natürlich die Schaffung dieser externen Meßgrößen, was off außerhalb jeder Möglichkeit steht. Die Erfindung bedeutet aber auch für diese bekannten Stützverfahren eine wertvolle Ergänzung.

Die Verwendung eines INS ist auch zur Messung von Winkeln und Winkelkennlinien in Großrohrleitungen bei sogenannten Molchen bekannt, in denen die von dem zu transportierenden Medium als Trennelemente zwischen einzelnen Chargen mitgenommen werden (US-A-4,799,391). Das INS mit drei Kreiseln, drei Be-

EP 0 457 200 B1

schleunigungsmessern und einem Digitalrechner ist hierbei in den Molchen untergebracht. Zusätzlich ist eine Zeitbasis vorgesehen zur Bestimmung der Rohrkrümmung in Abhängigkeit vom Ort des Molches in der Rohrleitung. Zur Ortsbestimmung mittels des INS werden als externe Messungen zur INS-Stützung beispielsweise die entlang der Rohrleitung vorhandenen Indikatoren, wie magnetische Anomalien in Form von Rundschweißnähten oder dergleichen, herangezogen.

Es ist weiter ein Verfahren zur Messung der Radstellung bei Fahrzeugen bekannt, bei dem mit einem Winkelmeßgerät, das einen Kreisel enthält, für jedes Rad der Winkel zwischen dem Rad und einer vom Kreisel erzeugten Bezugsbasis gemessen wird. Das Winkelmeßgerät wird nacheinander an Anlageflächen der einzelnen Räder zur Anlage gebracht und der für das jeweilige Rad gemessene Winkel in einem Rechner abgespeichert. Vor der ersten Messung wird der Kreisel kalibriert, indem der Driftwinkel des Kreisels pro Zeiteinheit gemessen wird. Daraus wird der Driftkorrekturwinkel bestimmt, mit der der aktuell gemessene Winkel im Rechner korrigiert wird (WO-A-8809913).

Aufgabe der Erfindung ist es, ein Verfahren aufzuzeigen, mit dem bei minimalem Geräteaufwand, d.h. mit Hilfe eines Kreisels in einfacher Weise Messungen von Winkeln oder Winkelkennlinien mit hoher Genauigkeit durchführbar sind. Bestimmbar sollen dabei auch den Meßvorgang kennzeichnende Bezugsgrößen sein, die mit dem zu messenden Winkel in einein eindeutigen Zusammenhang stehen.

Diese Aufgabe wird gemäß der Erfindung gelöst durch die im Patentanspruch 1 herausgestellten Merkmale.

Eine zweckmäßige Ausgestaltung ist Gegenstand des abhängigen Patentanspruchs.

Durch die bei dem erfindungsgemäßen Verfahren durchgeführte Fehlerkorrektur lassen sich auch mit Kreiseln geringer Güte sehr genaue Messungen durchführen.

Die Erfindung ist in Zeichnungen beispielsweise veranschaulicht und nachstehend im einzelnen beschrieben.

Fig. 1 zeigt das Verfahren schematisch in Anwendung zur Messung von Winkeln $\alpha$ zwischen Bezugsflächen,

Fig. 2 zeigt das Verfahren schematisch in Anwendung zur Messung von Winkeln $\alpha$ zwischen Bezugsrichtungen,

Fig. 3 zeigt das Verfahren in Anwendung zur Messung der Winkel $\alpha$ in Abhängigkeit von der Durchbiegung unter einer Gewichtsbelastung F.

Fig. 4 zeigt das Verfahren in Anwendung zur Messung der Winkel $\alpha$ in Abhängigkeit von einer kontinuierlich veränderbaren Kraft F.

Fig. 5 zeigt Winkelkennlinien bei Verformungsmessungen ($\alpha$(F),oben) und bei aerodynamischen Messungen (F($\alpha$),unten).

Fig. 6 zeigt die Anwendung des Verfahrens bei aerodynamischen Messungen.

Fig. 7 zeigt für Winkelmessungen die Meßstellen-Nummer bzw. die Bezugsgröße, den zwischen den Meßstellen zu messenden Winkel $\alpha$, die Kreiselmeßabweichung $\varepsilon$, die Kreiselmessung $\alpha^*$ und die im Rechner zu verarbeitende Differenz $\Delta\alpha^*$ für Messungen mit gleichen Bezugsgrößen.

Fig. 8 zeigt für Winkelkennlinien-Messungen den zeitlichen Verlauf der Kraft F als Bezugsgröße, den zu messenden Winkel $\alpha$, die Kreiselmeßabweichung $\varepsilon$, die Kreiselmessung $\alpha^*$ und die im Rechner zu verarbeitende Differenz $\Delta\alpha^*$ für Messungen mit gleichen Bezugsgrößen.

Fig. 9 zeigt ein Flußdiagramm des Rechenprogramms zur Korrektion der Kreiselmessungen.

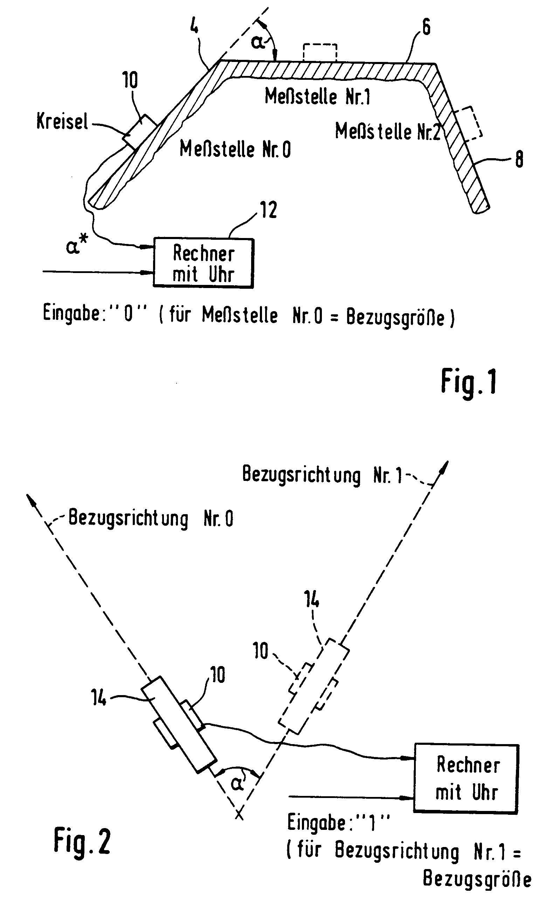

Zur Messung des Winkels $\alpha$ zwischen den Bezugsflächen 4, 6, 8 in Fig. 1 sind jeweils die Meßstellen 0, 1, 2 festzulegen, an denen der für die Messung eingesetzte Kreisel jeweils genau reproduzierbar ansetzbar ist. Der Kreisel 10, der für die jeweilige Messung ein Meßsignal $\alpha^*$ abgibt, ist auf einen Rechner 12 geschaltet, der mit einer Zeitbasis arbeitet. Dem Rechner wird für jede Meßstelle eine dieser Stelle zugeordnete Bezugsgröße eingegeben.

Die Bezugsgröße ist eine von Hand eingegebene Numerierung der Meßstelle oder der Bezugsrichtung mit den Zahlen 0, 1, 2 etc., wobei in der Zahl 0 zum Ausdruck kommt, daß sich die zu messenden Winkel auf diese Meßstelle beziehen (Fig. 1 und 2). Die Bezugsgröße für die Meßstelle kann selbstverständlich auch automatisch in den Rechner eingelesen werden durch ein maschinelles Erkennen eines Zeichens oder Merkmals beim Aufsetzen oder Überfahren.

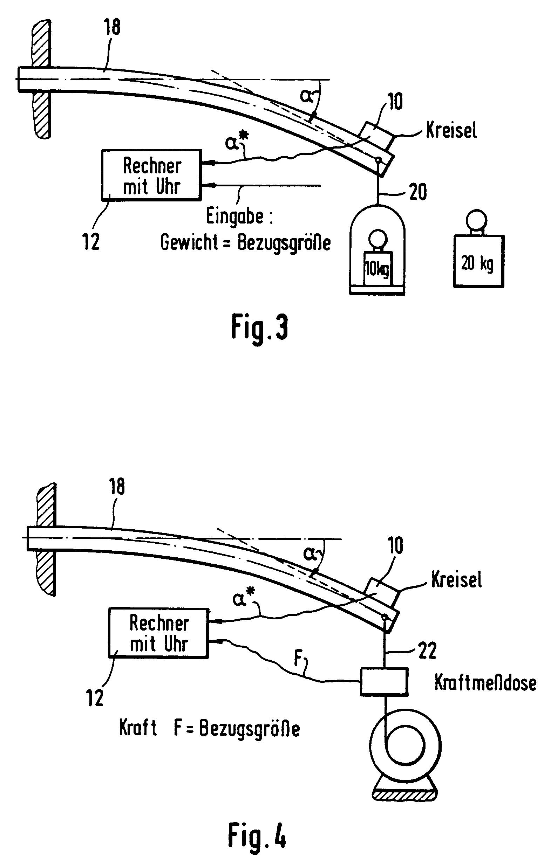

Bei der in Fig. 3 und 4 dargestellten Anwendung zur Ermittlung einer Biege- oder Torsionskennlinie in Form der Abhängigkeit des Auslenkungswinkels $\alpha$ von einem an dem Träger angreifenden Gewichtskraft 20 (Fig. 3) bzw. einer an dem Träger angreifenden kontinuierlich veränderlichen Kraft 22 (Fig. 4), ist der Kreisel auf dem Biegeträger ortsfest angeordnet. In beiden Fällen ist die Kraft die Bezugsgröße.

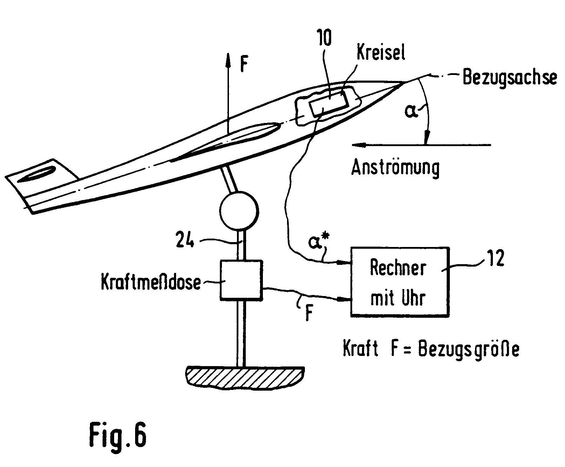

Die Anordnung nach Fig. 6 zeigt die Durchführung aerodynamischer Messungen zur Bestimmung der Auftriebskraft 24 bei jeweils eingestelltem Anströmwinkel $\alpha$. Auch hier ist die Kraft die Bezugsgröße.

Für alle in Fig. 1 bis 4 und 6 dargestellten Messungen wird bei gleichbleibenden äußeren Meßbedingungen die wiederholte Durchführung von Messungen mit gleichen Bezugsgrößen im Rechner als Referenz für Winkelgleichheit angesehen, woraus sich die weiter unten beschriebene Möglichkeit der Bestimmung der während des Meßvorganges wirkenden Kreisel-Meßabweichung infolge unbekannter Erdrate und Kreiseldrift ergibt mit ihrer nachfolgenden Korrektion. Hierin liegt der entscheidende Unterschied zu der Anwendung der oben beschriebenen Stützverfahren. Das Winkel- und Winkelkennlinien-Meßgerät benötigt zur Steigerung der Meßgenauigkeit keine externen Referenzen während des Meßprozesses, sondern lediglich die Information über die Gleichheit von Bezugsgrößen.

Der durch Integration aus den Kreisel-Rohmessungen gewonnene Winkel $\alpha^*$ soll im folgenden kurz als Kreiselmessung bezeichnet werden.

Wegen der oben genannten Einflüsse von unbekannter Erdrate und Kreiseldrift ist die Kreiselmessung $\alpha^*$ als Referenz für den zu messenden Winkel $\alpha$ oder für die Winkelkennlinie $F(\alpha)$ unbrauchbar, da ihr die Meßabweichung $\varepsilon$ überlagert ist

$$(1) \qquad \alpha^* = \alpha + \varepsilon,$$

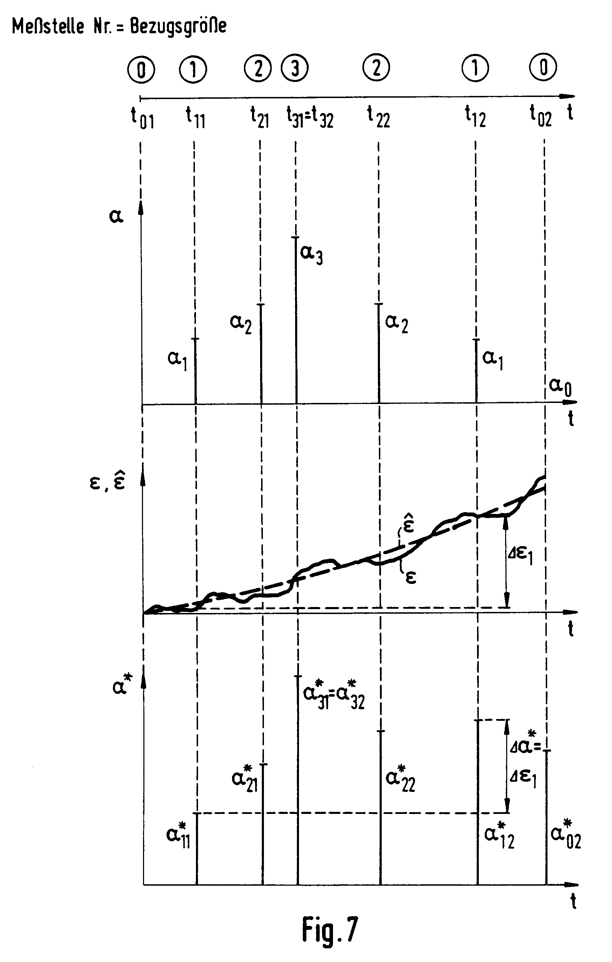

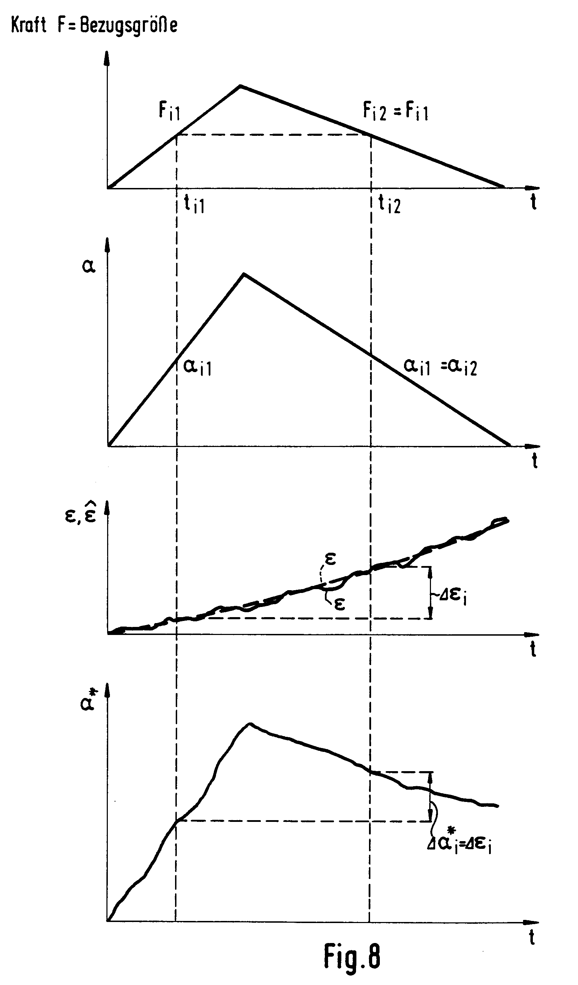

die infolge des Integrationsprozesses sich mit der Zeit ändert und z.B. folgender Beziehung genügt (Fig. 7 und 8 jeweils mittleres Diagramm):

$$(2) \qquad \varepsilon(t) = D\,t + R\,t^2 + \int w\,dt$$

mit D = unbekannter Erdrate plus Kreiseldrift, R = zeitlicher Änderung von D und w = stochastischer Anteil, der auf Winkelebene instationär und z.B. unter der Bezeichnung "random walk" bekannt ist.

Die Funktionsweise des Winkel- und Winkelkennlinien-Meßgerätes baut auf den schon genannten eindeutigen Zusammenhang zwischen äußerer Bezugsgröße und Winkel auf. Er wird im Rechner ausgenutzt, um die zeitabhängige Kreisel-Meßabweichung $\varepsilon(t)$ durch die Funktion

$$(3) \qquad \hat{\varepsilon}(t) = \hat{D}t + \hat{R}\,t^2$$

optimal anzunähern und an den Kreiselmessungen $\alpha^*$ durch Korrektion zu beseitigen. In Fig. 7 und 8 Mitte ist $\hat{\varepsilon}(t)$ gestrichelt eingezeichnet.

In Gl. (3) ist die mit w gekennzeichnete stochastische Kreisel-Meßabweichung nicht enthalten. Sie ist nicht zu schätzen, und ihr Beitrag schlägt sich in den Koeffizienten $\hat{D}$ und $\hat{R}$ nieder. Bei diesem Rechenprozeß wird davon ausgegangen, daß der Kreisel-Skalenfaktor mit hinreichender Genauigkeit bekannt ist, bzw. nach dem weiter unten beschriebenen Verfahren bestimmt wird.

Wichtig für die Datenverarbeitung im Rechner ist das Meßprogramm, das so auszulegen ist, daß zum einen bei Verwendung **eines** Kreisels auch nur eine Drehung um **eine** Achse stattfindet, d.h. die zu messenden Winkel liegen in einer erdfesten Bezugsebene und die Kreisel-Meßachse wandert während der Messung nicht oder nur in geringen Grenzen gegenüber dem Lot auf diese Bezugsebene aus. Zum andern müssen Meßvorgänge mit gleichen Bezugsgrößen mindestens zweimal wiederholt werden, wobei zusätzlich die weiter unten erläuterten Bedingungen für die Zeitdifferenzen zwischen Messungen einzuhalten ist.

Am Beispiel der Vermessung von Winkeln soll der Meßvorgang und die Datenverarbeitung im Rechner näher erläutert werden. Bei Messung der Winkel $\alpha_1$, $\alpha_2$, $\alpha_3$ zwischen den Meßstellen 0 und 1, 0 und 2, 0 und 3 (Fig. 1 und 2) sieht das Meßprogramm vor, die Meßstellen, bzw. - richtungen in beliebiger Reihenfolge, beispielsweise 0, 1, 2, 3, 2, 1, 0 oder 0, 3, 2, 1, 3, 2, 0 anzufahren (Fig. 7, oben), wobei im Rechner zu registrieren, bzw. berechnen sind:

- die Zeit $t_{ij}$ (mit i = Meßstelle und j = Meßdurchgang bei i),
- die Bezugsgrößen, d.h. die Zahlen i = 0, 1, 2, 3, 2, 1, 0 und
- die Kreiselmessung $\alpha^*_{ij}$ (mit $\alpha^*_{01} = 0$).

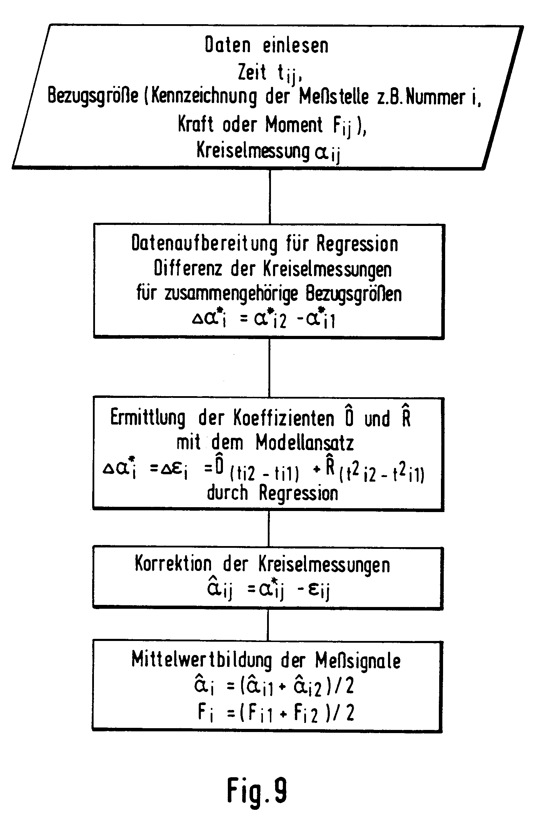

Dieses Einlesen der Daten ist in dein Flußdiagramm für die Datenauswertung in Fig.9 als oberster Block skizziert. Als nächster Rechenschritt erfolgt die Differenzbildung der Kreiselmessungen für zusammengehörige Bezugsgrößen i (Fig. 9, 2. Block):

$$(4) \quad \Delta\alpha^*_i = \alpha^*_{i2} - \alpha^*_{i1}$$

$$= [\,\alpha_{i2} + \varepsilon_{i2} - (\,\alpha_{i1} + \varepsilon_{i1}\,)]$$

$$= \varepsilon_{i2} - \varepsilon_{i1} = \Delta\varepsilon_i.$$

Diese Beziehung ist an den Figuren 7 und 8 nachzuvollziehen. Die Begründung ist darin zu suchen, daß Messungen mit gleichen Bezugsgrößen ja das Anfahren gleicher Meßstellen bzw. -richtungen bedeutet, bei denen der zu messende Winkel $\alpha_{i2} = \alpha_{i1}$ ist. Die Differenz der Kreisel-Messungen hat sich in der Zeitdifferenz

$t_{i2} - t_{i1}$ zwischen beiden Messungen um die Kreisel-Meßabweichung $\Delta\varepsilon_i$ erhöht. Nach Gl.(3) ist somit die Meßgleichung:

$$(5) \quad \Delta\alpha^*_i = \hat{D} \, (t_{i2} - t_{i1}) + \hat{R} \, (t^2_{i2} - t^2_{i1})$$

$$= \hat{D} \, (t_{i2} - t_{i1}) + \hat{R} \, (t_{i2} - t_{i1}) \, (t_{i2} + t_{i1}),$$

bzw. als Matrix-Vektorgleichung:

$$(6) \quad \Delta\alpha^*_i = \underline{\underline{H}}_i \, \underline{x}$$

mit

$$(7) \quad \underline{\underline{H}}_i = [(t_{i2} - t_{i1}) \, (t^2_{i2} - t^2_{i1})]$$

und

$$(8) \quad \underline{x} = (\hat{D} \, \hat{R})^T.$$

Nach Abschluß der Differenzbildung für alle Messungen mit gleichen Bezugsgrößen erfolgt im Rechner eine optimale Bestimmung der gesuchten Koeffizienten $\hat{D}$ und $\hat{R}$ nach bekannten Rechenverfahren (z.B. Regression). $\hat{D}$ enthält die unbekannte Komponente der Erdrate plus Kreiseldrift und $\hat{R}$ ihre zeitlichen Änderungen. In dem Flußdiagramm von Fig. 9 ist dies als 3. Block eingetragen. Eingesetzt in Gl.(3) ist nun die Korrektion der Kreiselmessung zu jedem Meßzeitpunk möglich (Fig. 9, 4. Block).

Es ist verständlich, daß die Koeffizienten $\hat{D}$ und $\hat{R}$ anhand aller möglichen Differenzen $\Delta\alpha^*_i$ der Kreisel-Messungen bestimmt werden sollten. Das Auswerteverfahren für diese Koeffizienten arbeitet aber auch, wenn einzelne Differenzen - z.B. an der 10. Meßstelle (i = 10) - ausgespart werden, weil dort ungünstige Meßbedingungen vorlagen. Die nachträgliche Korrektion der ausgesparten Kreisel-Messungen $\alpha^*_{10,1}$ und $\alpha^*_{10,2}$ nach Gl.(3) bleibt weiterhin möglich.

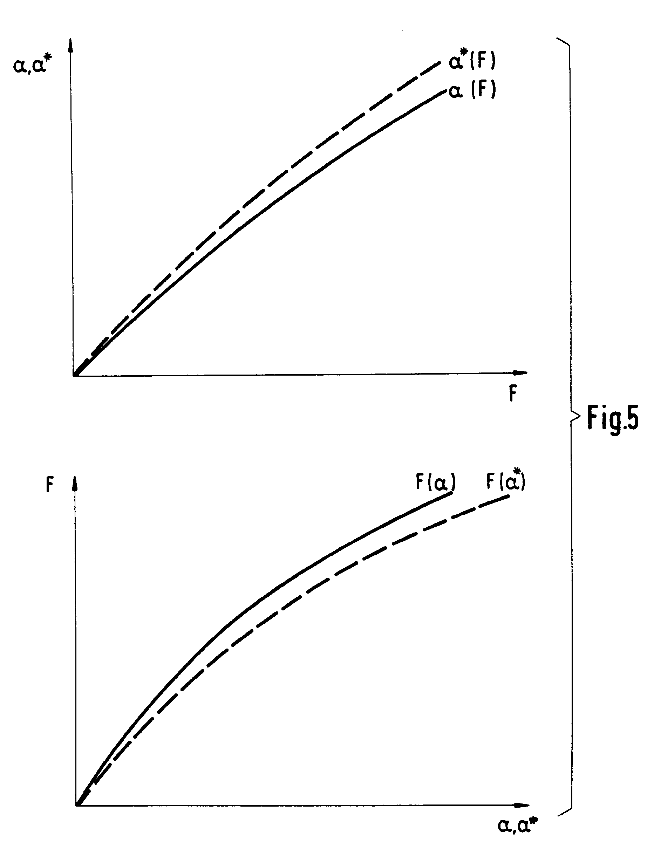

Da für jede Meßstelle bzw. Bezugsrichtung nach Korrektion mindestens zwei Meßwerte vorliegen, kann durch Mittelwertbildung von Messungen mit gleichen Bezugsgrößen eine weitere Genauigkeitssteigerung erfolgen (Fig. 9, 5. Block).

Als nächstes Beispiel soll auf die Vermessung von Winkelkennlinien eingegangen werden. Wie eingangs erwähnt ist darunter die Vermessung der Abhängigkeit zwischen der Winkelverformung von Bauteilen und den angreifenden äußeren Kräften oder Momenten zu verstehen (Fig. 3 bis 5), bzw. bei aerodynamischen Messungen die Ermittlung der Abhängigkeit zwischen Kräften oder Momenten und den Verstellwinkeln eines Flugzeugmodells (Fig. 6 und 5).

Das oben beschriebene Winkel-Meßgerät ist auch für diese Anwendung ohne wesentliche Änderung einsetzbar. Dem Rechner ist lediglich mitzuteilen, daß nun die Kräfte oder Momente die Bezugsgrößen sind. Da das oben beschriebene Verfahren zur Verarbeitung der Kreisel-Meßdaten auf wiederholt durchgeführte Messungen mit gleichen Bezusgrößen aufbaut, sieht das Meßprogramm eine positive Kraft- oder Momenteneinleitung vor bis zu einem Maximalwert, gefolgt von einem Rückfahren auf den Anfangswert (Fig. 3, 4 und 8). Bei aerodynamischen Messungen verfährt man entsprechend mit dem Verstellwinkel (Fig. 6 und 8).

Falls die Kräfte oder Momente nicht schon im Rechner als digitale Signale zur Verfügung stehen und diskret von außen aufgebracht werden, ist ihr Wert entweder von Hand einzugeben oder es werden wie bei der Winkelvermessung ersatzweise gleiche Ziffern für gleiche Werte eingegeben (Fig. 3 und 7).

Im letztgenannten Fall (diskrete Einleitung der Kräfte oder Momente) ist im Rechner die Auswahl zusammengehöriger Messungen, d.h. solchen bei Gleichheit der Kräfte oder Momente als Bezugsgrößen besonders einfach. Bei kontinuierlicher Kraft- oder Momenteneinleitung, bzw. kontinuierlicher Änderung des Verstellwinkels im Windkanal muß sich der Rechner zusammengehörige Messungen, d.h. solche mit gleichen Bezugsgrößen im positiven und negativen Verstellbereich durch Interpolation suchen. Auch hier ist es selbverständlich möglich, gewisse Meßbereiche bei der Ermittlung der Koeffizienten $\hat{D}$ und $\hat{R}$ auszusparen, sie aber in die nachträgliche Korrektion einzubeziehen.

Der in der Meßgleichung (5) für die Kreiselmeßabweichung gesuchte Koeffizient $\hat{R}$ für die zeitliche Änderung der Kreiseldrift ist von dem Rechner nur dann bestimmbar, wenn in dem Meßprogramm als Bedingung für zeitlichen Ablauf der Messungen beachtet wird, daß sich $(t_{i2} + t_{i1})$ auch signifikant ändert. Die Zeitdifferenzen zwischen den Messungen im positiven Verstellbereich müssen sich danach deutlich von denen im negativen unterscheiden. Dazu kann die positive Verstellgeschwindigkeit beispielsweise um den Faktor 2 höher gewählt werden als die negative oder umgekehrt (Fig. 7 und 8).

Der in dem Modell für die Kreiselmeßabweichung gesuchte Koeffizient $\hat{R}$ für die zeitliche Änderung von $\hat{D}$ geht in die Meßgleichung (5) für die Regression über die Differenz des Quadrates der Meßzeiten als Variable ein, wofür zu setzen ist:

$$(9) \qquad t^2_{i2} - t^2_{i1} = (t_{i2} + t_{i1})(t_{i2} - t_{i1}),$$

d.h. sie ist das Produkt aus dem zweifachen arithmetischen Mittel und der Differerenz der Meßzeiten. Letztere ist nach der Meßgleichung (5) aber auch die Variable zur Bestimmung von $\hat{D}$. Da sich zur erfolgreichen Bestimmung von $\hat{R}$ die entsprechenden Variablen von $\hat{D}$ und $\hat{R}$ für die verschiedenen Messungen signifikant voneinander unterscheiden müssen, folgt aus Gl.(9) für die Beobachtbarkeit von $\hat{R}$, daß sich die arithmetischen Mittel der Meßzeiten $(t_{i2} + t_{i1})/2$ von Messung zu Messung ändern müssen. Nach Fig. 7 und 8 wird das zweckmäßig dadurch erreicht, daß folgende Bedingung für zeitlichen Ablauf der Messungen eingehalten wird. Die Zeitdifferenzen zwischen den Messungen im positiven Verstellbereich müssen sich deutlich von denen im negativen unterscheiden, beispielsweise um den Faktor 2. Bei kontinuierlicher Verstellung ist dazu lediglich die positive Verstellgeschwindigkeit beispielsweise um den Faktor 2 höher zu wählen als die negative oder umgekehrt.

Der Skalenfaktor-Kalibriervorgang nutzt das oben beschriebene Winkelmeß-Verfahren aus. Dem Rechner wird eine Kennung für diese Betriebsart eingegeben. Der zu kalibrierende Kreisel wird mit seiner empfindlichen Achse senkrecht zur Fläche gestellt und an den Anschlag geführt. Dem Rechner wird als Bezugsgröße die Ziffer 0 eingegeben. Der Kreisel wird nun auf der Fläche um den Winkel 360° gedreht und wieder an den Anschlag geführt, wonach die Ziffer 1 eingegeben wird. Messungen nach weiteren Verstellungen im wechselnden Drehsinn werden mit fortlaufenden Ziffern gekennzeichnet. Anschließend ermittelt der Rechner die zeitlich veränderliche Meßabweichung infolge Erdrate und Kreiseldrift unter Ausnutzung der Tatsache, daß sich in der Kreiselmessung nach einer positiven und einer negativen 360°-Drehung der Anteil eines konstanten Skalenfaktorfehlers auf null reduziert hat. In den Differenzen von Messungen mit gradzahligen und mit ungradzahligen Ziffern ist also lediglich die genannte Kreisel-Meßabweichung $\varepsilon(t)$ enthalten. Nach Schätzung ihres Verlaufes $\hat{\varepsilon}(t)$ und ihrer Korrektion liegen im Rechner die korrigierten Kreisel-Winkelmessungen vor, die nach jeweils einer Drehung ±360° betragen müssen. Aus der Differenz ist der Kreisel-Skalenfaktorfehler zu ermitteln und durch Korrektion zu beseitigen.

## Patentansprüche

1.  Verfahren zur Messung von Winkeln zwischen Bezugsrichtungen mit Hilfe eines Kreisels, bei dem
    - mit dem Kreisel in jeder Bezugsrichtung nacheinander eine Mehrzahl von Messungen vorgenommen wird, und für jede Messung in einer der Bezugsrichtungen eine Bezugsgröße registriert wird, die mit dem zu messenden Winkel in einem eindeutigen Zusammenhang steht,
    - die bei den einzelnen Messungen ermittelten Kreisel-Meßsignale $\alpha^*$ und die Bezugsgrößen einer Zeitbasis zugeordnet einem Rechner aufgegeben werden,
    - in dem Rechner die Differenz der Zeiten t, zu denen die einzelnen Messungen gleicher Bezugsgrößen durchgeführt worden sind, sowie die Differenz der Kreisel-Meßsignale $\alpha^*$ zu diesen Zeiten berechnet werden und als Eingangsgrößen in den folgenden Meßgleichungs-Ansatz eingehen :

        $\Delta\alpha^*_i = \alpha_{i2}^* - \alpha_{i1}^* = \hat{D}(t_{i2} - t_{i1}) + \hat{R}(t^2_{i2} - t^2_{i1}) = \hat{D}(t_{i2} - t_{i1}) + \hat{R}(t_{i2} - t_{i1})(t_{i2} + t_{i1})$

        mit

        D = optimaler Schätzwert für die unbekannte Erdrate plus Kreiseldrift und

        R = optimaler Schätzwert für die zeitliche Änderung der unbekannten Erdrate plus Kreiseldrift,

        Index i = Kennzeichnung der Meßstelle, bzw. Bezugsgröße,

        Index 1,2 = Kennzeichnung des Meßdurchganges,

    - und anschließend im Rechner eine optimale Bestimmung der Koeffizienten $\hat{D}$ und $\hat{R}$ erfolgt zur nachträglichen Korrektur der Kreisel-Meßabweichung.

2.  Verfahren nach Anspruch 1,
    bei dem zur Beobachtbarkeit von $\hat{R}$ die Zeitabstände zwischen den wiederholt durchgeführten Messungen in dem Sinne voneinander unterschiedlich gewählt werden, daß sich der Term $(t_{i2} + t_{i1})$ für die verschiedenen Meßstellen in dem Meßgleichungsansatz deutlich ändert.

## Claims

1.  A method for the measurement of angles between reference directions by means of a gyro, wherein
    - with the aid of the gyro a plurality of measurements is carried out successively in each reference direction and for each measurement in one of the reference directions there is registered a reference magnitude, which has an unambiguous relationship to the angle to be measured.

- the gyro measurement signals $\alpha^*$ determined during the individual measurements and the reference magnitudes assigned to a time base are supplied to a computer,
- in the computer the difference of the times, at which the individual measurements having the same reference magnitudes are undertaken, as well as the difference of the gyro measurement signals $\alpha^*$ at these times are calculated and enter the following measurement equation set up as input magnitudes.

$$\Delta\alpha^*_i = \alpha_{i2}^* - \alpha_{i1}^* = \hat{D}(t_{i2} - t_{i1}) + \hat{R}(t^2_{i2} - t^2_{i1}) = \hat{D}(t_{i2} - t_{i1}) + \hat{R}(t_{i2} - t_{i1})(t_{i2} + t_{i1})$$

with

$D$ = optimal estimate for the unknown earth rate plus gyro drift, and

$R$ = optimal estimate for the variation with time of the unknown earth rate plus gyro drift,

index $i$ = identification of the measurement position or reference magnitude,

index 1,2 = identification of the measurement process,

- and subsequently there occurs in the computer an optimal determination of the coefficients $\hat{D}$ and $\hat{R}$ for subsequent correction of the gyro measurement error.

2. A method according to claim 1, wherein for the observability of $\hat{R}$, the time intervals between the repeated measurements are selected to differ from each other such that the term $(t_{i2} + t_{i1})$ for the different measurement positions varies significantly in the measurement equation set up.

## Revendications

1. Procédé pour la mesure d'angles entre des directions de référence à l'aide d'un gyroscope, pour lequel :
   - une pluralité de mesures est effectuée successivement suivant chaque direction de référence avec le gyroscope, et pour chaque mesure dans une des directions de référence, une grandeur de référence, qui est en relation univoque avec l'angle à mesurer, est enregistrée,
   - les signaux de mesure gyroscopique $\alpha^*$ déterminés au cours des différentes mesures et les grandeurs de référence affectées à une base de temps sont chargés dans un calculateur,
   - dans le calculateur, la différence des temps t, au cours de laquelle les différentes mesures des mêmes grandeurs de référence ont été effectuées, ainsi que la différence des signaux de mesure gyroscopique $\alpha^*$ à ces temps sont calculées et interviennent comme grandeurs d'entrée dans la mise en équation suivante des mesures :

$$\Delta\alpha^*_i = \alpha_{i2}^* - \alpha_{i1}^* = \hat{D}(t_{i2} - t_{i1}) + \hat{R}(t^2_{i2} - t^2_{i1}) = \hat{D}(t_{i2} - t_{i1}) + \hat{R}(t_{i2} - t_{i1})(t_{i2} + t_{i1})$$

   avec

   $D$ = valeur estimative optimale pour la vitesse de rotation de la terre plus dérive gyroscopique inconnue et

   $R$ = valeur estimative optimale pour la variation dans le temps de la vitesse de rotation de la terre plus dérive gyroscopique inconnue,

   indice $i$ = désignation du point de mesure, respectivement de la grandeur de référence,

   indice 1,2 = désignation de l'étape de mesure,
   - et ensuite une détermination optimale des coefficients $\hat{D}$ et $\hat{R}$ s'effectue dans le calculateur pour la correction ultérieure de la déviation de mesure gyroscopique.

2. Procédé selon la revendication 1, dans lequel, pour pouvoir observer $\hat{R}$, les intervalles de temps entre les mesures effectuées de façon répétitive sont choisis différents les uns des autres dans le sens où le terme $(t_{i2} + t_{i1})$ de la mise en équation de la mesure, pour les différents points de mesure, varie de façon significative.

Eingabe:"0" ( für Meßstelle Nr.0 = Bezugsgröße )

Fig.1

Fig.2

Eingabe:"1"
( für Bezugsrichtung Nr.1 =
Bezugsgröße

18

α

10

Kreisel

α*

Rechner
mit Uhr

20

12

Eingabe :
Gewicht = Bezugsgröße

10kg

20 kg

## Fig.3

18

α

10

Kreisel

α*

Rechner
mit Uhr

F

22

Kraftmeßdose

12

Kraft   F = Bezugsgröße

## Fig.4

Fig.5

F

10

Kreisel

Bezugsachse

α

Anströmung

α*

Rechner
mit Uhr

12

24

Kraftmeßdose

F

Kraft F = Bezugsgröße

Fig.6

Meßstelle Nr. = Bezugsgröße

Fig.7

Kraft $F$ = Bezugsgröße

$F_{i1}$

$F_{i2} = F_{i1}$

$t_{i1}$ $t_{i2}$ $t$

$\alpha$

$\alpha_{i1}$ $\alpha_{i1} = \alpha_{i2}$

$t$

$\varepsilon, \hat{\varepsilon}$

$\varepsilon$

$\varepsilon$

$\Delta\varepsilon_i$

$t$

$\alpha^*$

$\Delta\alpha_i^* = \Delta\varepsilon_i$

$t$

# Fig.8

Fig. 9